# EUROPÄISCHE PATENTANMELDUNG

(11) **EP 0 802 128 A2**
(43) Veröffentlichungstag der Anmeldung: **22.10.1997**
(21) Anmeldenummer: 97890063.7
(22) Anmeldetag: 04.04.1997
(51) Int. Cl.: B65G 1/137

(54) **Kommissioniereinrichtung**

(30) Priorität: 19.04.1996 AT 713/96
(71) Anmelder: P.E.E.M. Förderanlagen Ges.m.b.H., 8051 Graz (AT)
(72) Erfinder: Neukam, Helmut, Ing., 8071 Hausmannstätten (AT)
(74) Vertreter: Kliment, Peter

(57) **Zusammenfassung**

Kommissioniereinrichtung für flexible unverpackte- oder mit einer flexiblen Verpackung, wie Papiersäcken od. dgl. verpackten Waren, insbesondere Wäsche, Hemden u.ä., bei der eine seitlich einer Fördereinrichtung (2) Stapelbehälter (8) für die zu kommissionierenden Waren angeordnet sind, wobei eine Steuereinrichtung (7) zur Steuerung der Abgabe der Waren vorgesehen ist. Um auch solche maschinell nur schwer handhabbare Waren maschinell kommissionieren zu können, ist vorgesehen, daß die Steuereinrichtung (7) mit den Antrieben je einem Stapelbehälter (8) zugeordneten, verschwenkbar gehaltenen Greifern (4) verbunden ist und diese steuert.

## Beschreibung

Die Erfindung bezieht sich auf eine Komissioniereinrichtung gemäß dem Oberbegriff des Anspruches 1.

Bei bekannten derartigen Kommissioniereinrichtung sind die Waren in Fächern einer Stellage gestapelt, wobei an den Frontseiten der Steher der Stellage optische Anzeigen, meist Lampen oder Leuchtdioden angeordnet sind, die von der Steuereinrichtung gemäß den geforderten Kommissionen gesteuert sind und deren Aufleuchten dem Bedienungspersonal anzeigt, das ein Warenstück aus dem betreffenden Fach zu entnehmen und auf die Transporteinrichtung zu legen ist. Ein solches System ist unter der Bezeichnung "Pick by Light" bekannt.

Eine solche Kommissioniereinrichtung weist zwar den Vorteil auf, daß die Kommissionierung nicht mehr anhand von Kommissionierlisten erfolgt, nach denen die einzelnen Kommissionen händisch zusammengestellt werden, doch bleibt der Nachteil einer händischen Kommissionierung, die eben einen sehr hohen Personaleinsatz erfordert, erhalten.

Ziel der Erfindung ist es, diesen Nachteil zu vermeiden und eine Kommissioniereinrichtung der eingangs erwähnten Art vorzuschlagen, die auch bei flexiblen unverpackten oder mit einer losen, flexiblen Verpackung versehenen Warenstücken eine maschinelle Kommissionierung zuläßt.

Erfindungsgemäß wird dies bei einer Kommissioniereinrichtung der eingangs erwähnten Art durch die kennzeichnenden Merkmale des Anspruches 1 erreicht.

Durch die Greifer ist es möglich stets das oberste Warenstück eines Stapelbehälters direkt oder dessen lose flexible Verpackung zu erfassen und auf die Fördereinrichtung, z.B. ein Förderband überzuführen, wobei auch eine Rutsche zwischengeschaltet sein kann. Die Greifer können dabei entweder um eine horizontale, parallele zur Förderrichtung der Fördereinrichtung verlaufende Achse oder um eine vertikale Achse schwenkbar gehalten sein.

Die Merkmale des Anspruches 2 ermöglichen einen sehr einfachen Aufbau der Greifer. So ist es bei der Verwendung von Hubböden nicht mehr erforderlich die Greifer absenk- und anhebbar auszubilden.

Durch die Merkmale des Anspruches 3 ergibt sich der Vorteil, daß eine Kontrolle ob ein Greifer ein Warenstück ordnungsgemäß erfaßt hat oder nicht gegeben ist und der Steuerung entsprechende Signale übermittelt werden können.

Die Merkmale des Anspruches 4 ermöglichen eine berührungslose Überwachung der sicheren Erfassung eines Warenstückes, sodaß auf empfindliche mechanische Fühler verzichtet werden kann.

Durch die Merkmale des Anspruches 5 ergibt sich der Vorteil, daß eine sehr sichere Erfassung eines von einem Greifer gehaltenen Warenstückes gewährleistet ist, unabhängig von der Farbe oder Beschaffenheit des Warenstückes oder seiner Verpackung und auch ein hohes Maß an Unempfindlichkeit gegen Raumlicht gegeben ist.

Die Merkmale des Anspruches 6 ermöglichen einen sehr einfachen Aufbau, wobei durch den vorgesehenen Winkel der Achsen der Optiken sichergestellt ist, daß der Sensor nur in einem örtlich sehr eingeschränkten Bereich empfindlich ist und daher der ein allfälliges Streulicht den Sensor kaum beeinflussen kann. Dabei ergibt sich durch die Anordnung des Sensors an einer feststehenden Backe der Vorteil, daß die entsprechenden Signalleitungen leicht verlegt werden können.

Die Merkmale des Anspruches 7 ermöglichen eine zentrale Anordnung des Sensors und eine sehr sichere Überwachung des Ergreifens eines Warenstückes, da bei einer Erfassung eines Warenstückes, sich dieses über die Ausnehmungen der Greiferbacken erstrecken muß.

Die Merkmale des Anspruches 8 ermöglichen einen sehr sicheren Halt der Warenstücke auch während des Verschwenkens der Greifer, um die Warenstücke auf die Transporteinrichtung überführen zu können.

Die Erfindung wird nun anhand der Zeichnung näher erläutert. Dabei zeigen:
Fig. 1 schematisch eine erfindungsgemäße Kommissioniereinrichtung,
Fig. 2 einen Greifer im Längsschnitt und
Fig. 3 einen Greifer im Querschnitt.

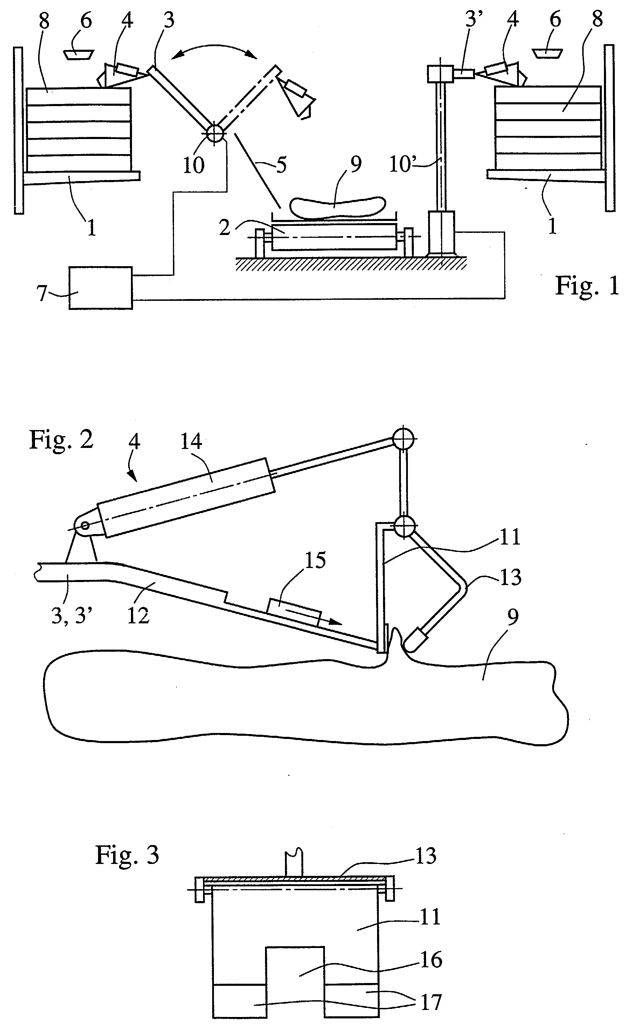

Die Kommissioniereinrichtung nach der Fig. 1 weist zu beiden Seiten einer Fördereinrichtung 2, die z.B. durch Rollenbahn oder ein Förderband gebildet sein kann, Stapelbehälter 8 auf, in denen zu kommissionierende Warenstückes 9, z.B. mit einer losen flexiblen Verpackung versehene Wäschestücke, Hemden, Blusen od. dgl.

Diese Stapelbehälter 8 sind mit einem Hubboden 1 versehen, der über einen nicht dargestellten Antrieb heb- und senkbar ist. Der nicht dargestellte Antrieb ist in Abhängigkeit von einem berührungslos arbeitenden Lagesensor 6, z.B. einer Lichtschranke, wobei der Hubboden stets auf eine Höhe gehoben wird, in der das oberste Warenstück eine vorbestimmte Höhenlage einnimmt, die durch den Lagesensor 6 erfaßt wird.

Weiters ist jedem Stapelbehälter 8 ein Greifer 4 zugeordnet, der an einem um eine Schwingachse 10, 10' schwenkbaren Schwenkarm 3, 3' gehalten ist.

Wie aus der Fig. 1 zu ersehen ist, kann der Schwenkarm 3, 3' um ein vertikale oder horizontale Achse 10', 10 schwenkbar sein, wobei eine horizontale Schwenkachse 10, im wesentlichen parallel zur Förderrichtung der Fördereinrichtung 2 verläuft.

In der linken Hälfte der Fig. 1 ist die Möglichkeit angedeutet, zwischen den Stapelbehältern 8 und der Fördereinrichtung 2 eine Rutsche 5 vorzusehen. Die Stapelbehälter 8 können auch mit verstellbaren Wänden versehen sei, um eine Anpassung an die Größe der zu kommissionierenden Warenstücke zu ermöglichen.

Die nicht gesondert dargestellten Antriebe der Greifer 4 und der Schwenkarme 3, 3' sind mit einer Steuerung 7 verbunden, in der die einzelnen Kommissionen einschreibbar sind und die die Entnahme der einzelnen Warenstücke 9 aus den einzelnen Stapelbehältern 8 steuert und überwacht.

Wie aus der Fig. 2 zu ersehen ist, geht der Schwenkarm 3, 3' in einen mit einer Backe 11 verbundenen Grundkörper 12 eines Greifers 4 über oder ist mit diesem fest verbunden. An der festen Backe 11 ist eine bewegliche Backe 13 angelenkt, die über eine an dem Grundkörper 12 abgestützten Zylinder-Kolben-Einheit 14 betätigbar ist.

Weiter ist an der Oberseite des Grundkörpers 12 ein Sensor 15 angeordnet, der das Erfassen eines Warenstückes 9 überwacht und mit der Steuerung 7 verbunden ist.

Wie aus der Fig. 3 zu ersehen ist, weisen die beiden Backen 11, 13 des Greifers 4 in deren mittlerem Bereich an der Greifkante offene Ausnehmungen 16 auf, auf die der Sensor 15 ausgerichtet ist.

Dieser Sensor weist eine lichtemittierende Diode, die mit getakteten Signalen beaufschlagt ist und ein lichtempfindliches Element, z.B. einen Fototransistor auf, die mit Optiken versehen sind, deren Achsen einen spitzen Winkel einschließen, dessen Scheitelpunkt im Bereich der Ausnehmungen 16 der Backen 11, 13 des Greifers 4 liegt. Dabei ist der Sensor mit einer nicht dargestellten Auswerteschaltung verbunden, die überprüft, ob die vom Fototransistor empfangenen Lichtimpulse der Frequenz der von der Leuchtdiode ausgesandten Impulse entspricht, sodaß erkannt werden kann, ob das von der Leuchtdiode ausgesandte Licht durch das ergriffene Warenstück reflektiert wird. Letzteres ist nur der Fall, wenn tatsächlich ein Teil eines Warenstückes 9 oder dessen Verpackung vom Greifer 4 erfaßt ist.

Damit ist auf einfache Weise die erfolgreiche Durchführung eines Befehls der Steuerung 7 möglich, wobei die Auswerteschaltung des Sensors 15 mit der Steuereinrichtung 7 verbunden ist.

Damit ist es auch möglich, allfällig auftretende Fehler bei der Erfassung eines Warenstückes 9 zu erkennen, sodaß die Steuerung 7 darauf entsprechend reagieren kann und den Befehl zum Ergreifen eines bestimmten Warenstückes 9 wiederholt.

Um ein sicheres Ergreifen der Warenstücke 9 zu ermöglichen, sind die Backen 11, 13 des Greifers mit Überzügen 17 aus einem Elastomer mit einem hohen Reibungskoeffizienten versehen.

Beim Kommissionieren ergreifen die den einzelnen Stapelbehältern 8 zugeordneten Greifer 4 entsprechen der vorgesehenen Kommission nacheinander die entsprechende Stückzahl der jeweiligen Warenstücke und legen dies nach einem entsprechenden Verschwenken auf der Fördereinrichtung, bzw. der Rutsche 5 ab. Die Steuereinrichtung 7 kann dabei mit einem Rechner gekoppelt sein, in den die einzelnen Kommissionen eingeschrieben werden.

Mit der dargestellten Kommissioniereinrichtung können daher auch Waren, die bisher nur händisch kommissioniert werden konnten maschinell und automatisch kommissioniert werden.

Sehr vorteilhaft ist es, wenn im Bereich der freien vorzugsweise mit einem Überzug 17 versehenen Kanten der Backen 11, 13 des Greifers 4, nicht dargestellte Saugöffnungen angebracht sind, die mit einer Unterdruckquelle in Verbindung stehen. Damit kann das zu ergreifende Warenstück 9 oder dessen Verpackung sehr sicher erfaßt werden. Die Haltekraft wird dabei im wesentlichen durch die Klemmung der Backen 11, 13 des Greifers 4 aufgebracht, wogegen durch das Saugen ein sicheres Anheben des Warenstückes 9 oder dessen Verpackung gewährleistet ist, wodurch das Erfassen desselben durch die Backen 11, 13 erleichtert wird.

## Patentansprüche

1. Kommissioniereinrichtung für flexible unverpackte oder mit einer flexiblen Verpackung, wie Papiersäcken od. dgl. verpackten Waren, insbesondere Wäsche, Hemden u.ä., bei der eine seitlich einer Fördereinrichtung (2) Stapelbehälter (8) für die zu kommissionierenden Waren angeordnet sind, wobei eine Steuereinrichtung (7) zur Steuerung der Abgabe der Waren vorgesehen ist, **dadurch gekennzeichnet**, daß die Steuereinrichtung (7) mit den Antrieben je einem Stapelbehälter (8) zugeordneten, verschwenkbar gehaltenen Greifern (4) verbunden ist und diese steuert.

2. Kommissioniereinrichtung nach Anspruch 2, **dadurch gekennzeichnet**, daß jeder Stapelbehälter (8) mit einem Hubboden (1) versehen ist, der in Abhängigkeit vom Füllungsgrad des Stapelbehälters (8) gesteuert ist und das oberste Warenstück 89) stets in einer vorbestimmten Höhe hält.

3. Kommissioniereinrichtung nach Anspruch 1 oder 2, **dadurch gekennzeichnet**, daß der Greifer (4) zwei gegeneinander bewegbare Backen (11, 13) aufweist und mit einem Sensor (15) versehen ist, der auf die vom Greifer (4) erfaßten Warenstücke (9) anspricht.

4. Kommissioniereinrichtung nach einem der Ansprüche 1 bis 3, **dadurch gekennzeichnet**, daß der Sensor (15) durch eine Kombination einer lichtemittierenden Diode und eines lichtempfindlichen Elementes, vorzugsweise einen Fototransistor gebildet ist.

5. Kommissioniereinrichtung nach Anspruch 4, **dadurch gekennzeichnet**, daß die lichtemittierende Diode mit einem getakteten Signal beaufschlagt ist und dem lichtempfindlichen Element eine Auswerteschaltung nachgeschaltet ist, die prüft, ob das empfangene Licht, der Taktfrequenz der Ansteuerung der lichtemittierenden Diode entspricht.

6. Kommissioniereinrichtung nach Anspruch 4 oder 5, **dadurch gekennzeichnet**, daß die lichtemittierende Diode und das lichtempfindliche Element an ein und derselben Backe (11), vorzugsweise einer feststehenden Backe (11) angeordnet und mit Optiken versehen sind, deren Achsen einen spitzen Winkel einschließen.

7. Kommissioniereinrichtung nach einem der Ansprüche 3 bis 6, **dadurch gekennzeichnet**, daß der Greifer (4) in seinen Greifbacken (11, 13) Ausnehmungen (16) aufweist, auf deren Bereich der Sensor (15) gerichtet ist.

8. Kommissioniereinrichtung nach einem der Ansprüche 1 bis 7, **dadurch gekennzeichnet**, daß die Backen des Greifers (11, 13) mit einem Elastomer mit hohem Reibungskoeffizienten überzogen sind.
